# EUROPEAN PATENT SPECIFICATION

(11) **EP 0 315 599 B1**
(45) Date of publication and mention of the grant of the patent: **03.02.1993**
(21) Application number: 88830456.5
(22) Date of filing: 28.10.1988
(51) Int. Cl.: A47J 43/044, A21C 1/02

(54) **A kneading machine for food products**
Knetmaschine für Nahrungsmittel
Pétrin pour denrées alimentaires

(30) Priority: 03.11.1987 IT 6793387
(43) Date of publication of application: 10.05.1989
(73) Proprietor: SANCASSIANO S.p.A., I-12060 Roddi d'Alba (Cuneo) (IT)
(72) Inventor: Drocco, Amabile, I-12051 Alba (Cuneo) (IT)
(74) Representative: Bosotti, Luciano

(56) References cited:
- CH-A- 306 332
- DE-A- 1 757 361
- DE-A- 2 153 704
- DE-B- 1 283 449
- FR-A- 396 464
- FR-A- 2 546 719
- NL-C- 68 605

## Description

The present invention relates to kneading machines for food products, particularly flour mixtures, of known type according to the pre-characterising portion of claim 1.

Kneading machines for food products which have rotatable bowls and kneading tools rotatable about vertical axes have been known and used for some time. The kneading tool is usually spiral-shaped and machines of this type are commonly known as spiral kneading machines.

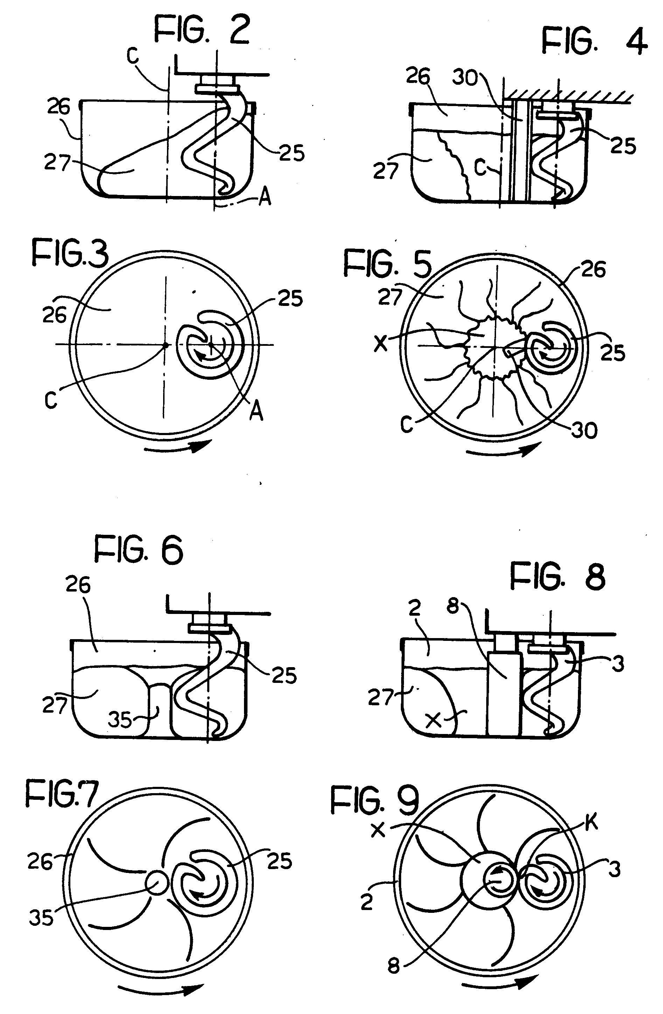

Figure 2 and 3 show schematically and elevational view and a plan view of a conventional spiral kneading machine. In these drawings, the kneading bowl is indicated 26 and is rotatable about a vertical axis C, whilst the dough which is contained in the bowl and is rotated by the bowl itself is indicated 27. The rotation of the bowl gradually brings the various portions of the dough into correspondence with the spiral kneading tool 25 which is supported for rotation about a vertical axis A spaced from the axis C. The senses of rotation of the bowl 26 and of the kneading tool 25 are indicated by the arrows.

The conventional spiral kneading machines illustrated in Figures 2 and 3 of the appended drawings have the disadvantage that they cause excessive heating of the dough with resulting physico-chemical changes in the dough which compromise the subsequent leavening and baking stages. The time required for the kneading is also relatively long and this, amongst other things, contributes to the increase in the degree of overheating of the product.

In an attempt to resolve this problem, a kneading machine for food products of the type illustrated in Figures 4 and 5 of the appended drawings has been proposed in the past. This machine differs from a conventional machine in that it includes a counter member 30 supported in a fixed position within the rotatable bowl 26 at a certain distance from the axis of rotation C and adjacent the kneading tool 29. The presence of the counter member 30 means that, in use, an empty dough-free space X is created in the central part of the bowl 26, which enables greater aeration of the dough and therefore a smaller increase in temperature. At the same time, the member 30 acts as a separator for detaching from the tool 25 any dough adhering thereto.

The known machine illustrated in Figures 4 and 5 enables the overheating of the dough to be avoided, but does not ensure a satisfactory degree of homogeneity of the product such as not to give rise to problems in the subsequent leavening stage. The reason for this lack of homogeneity consists of the fact that the dough detached from the spiral kneading member 25 by the counter member 30 is subjected to stretching which gives rise to unevenness in the dough.

In the conventional machine illustrated in Figures 2 and 3, the kneading time is of the order of 12-14 minutes and the increase in temperature is approximately 8-10°C. The known machine illustrated in Figures 4 and 5 has a kneading time of about 7-8 minutes and a temperature range of 5-6°C but, as already indicated, involves unevenness and stretching of the dough with a consequent lack of homogeneity.

Figures 6 and 7 of the appended drawings illustrate another spiral kneading machine of known type produced and sold for some time by the Applicant, which differs from the conventional machine of Figures 2 and 3 in that a column 35 is provided in the centre of the bowl, which is movable with the bowl and serves to detach the dough from the kneading tool 25. This system has considerable advantages, since the kneading time is very short (5 minutes); the temperature increase, however, is only slightly less than that of the conventional machine (7-8°C). The final homogeneity of the dough is considered satisfactory.

In the attempt to provide a remedy for the aforesaid drawbacks, FR-A-2546719 suggests to use a fixed cylindrical counter member with a flared base, disposed in a position analogous to that of the counter member 30 in Figures 4 and 5, but this arrangement does not result wholly satisfactory.

Moreover DE-A-1757361 proposes making the counter member rotatable around its axis, and particularly rotatable in the same sense of rotation of the kneading bowl and in the opposite sense of the kneading tool.

The object of the present invention is to produce a kneading machine of the type specified above which overcomes all the disadvantages of the solutions proposed up to now.

In the order to achieve this object, the subject of the invention is a kneading machine of the type indicated at the beginning of the present description and having the features indicated in the characterising portion of claim 1.

The counter member fulfils the function of a member for separating the dough from the kneading tool and at the same time creates a dough-free space in the centre of the bowl when the dough is rotated by the bowl. The temperature increase of the dough is thus limited. At the same time, since the counter member is rotatable, stretching of the dough is avoided so that a smooth dough is produced without unevenness.

Tests carried out by the Applicant have shown that the dough produced by the machine according to the invention has a quite limited increase in temperature due to the kneading action compared with known systems. The degree of homogeneity achieved on completion of the kneading is much improved both as regards its smooth, soft appearance and as regards its behaviour during the subsequent leavening and baking stages. The quality of the final product is considerably better than with the known machine illustrated in Figures 4 and 5, since the dough which is in contact with the rotating counter member has the same velocity and is therefore accompanies by the rotating counter member.

The smaller increase in temperature of the dough is due, as already indicated, to the creation of a central dough-free space within the bowl as a result of the present of the rotating counter member. The greater aeration of the dough, as well as the reduced temperature increase, causes and improved chemical oxidation-reduction effect which, in some cases, particularly in the confectionery industry, enables the obtention of products of better quality than those kneaded by known systems.

Moreover, thanks to the fact that the velocity of the dough in the region between the kneading tool and the rotating counter member is identical to the peripheral velocity of that member, the dough is not subjected to stretching, so that perfect homogeneity of the produce is ensured.

Further characteristics and advantages of the present invention will become clear from the detailed description which follows with reference to the appended drawings, provided by way of non-limiting example, in which:

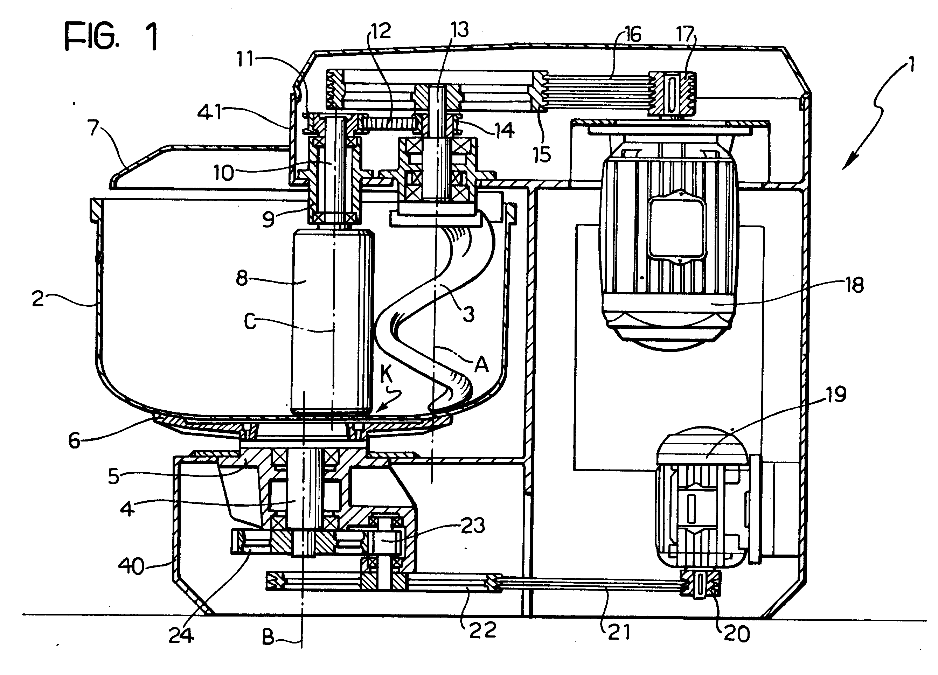

Figure 1 is a schematic elevational and sectional view of a kneading machine according to the present invention,
Figures 2 and 3 show a first prior-art kneading machine,
Figures 4 and 5 show a second prior-art kneading machine,
Figures 6 and 7 show a third prior-art kneading machine, and
Figures 8 and 9 show a schematic elevational and sectional view and a schematic plan view of the machine according to the invention.

Figure 1 shows a kneading machine for food products, particularly flour mixtures, comprising a fixed support structure 1 including a base 40 on which a kneading bowl 2 is supported for rotation about an axis B.

The means for rotating the kneading bowl are contained in the base and include an electric motor 19 which - by means of a pulley 20 and V-belts 21 - rotates a pulley 22 fast with a toothed pinion 23 supported by a structure 5 anchored to the base of the kneader. The pinion 23 rotates a gear 24 keyed to a shaft 4 carrying a support flange 6 at its upper end, to which the kneading bowl 2 is anchored by means of screws. The fixed structure 1 of the machine also includes a head 41 which projects over the kneading bowl 2. The head 41 supports, for rotation about a vertical axis A, a shaft 13 carrying at its lower end a kneading tool 3 which, in the example illustrated, is of the spiral type.

The kneading tool 3 is rotated about the axis A by an electric motor 18 and a transmission comprising a pulley 17 fixed to the driving shaft, a pulley 15 keyed to the shaft 13, and a series of V-belts 16 which engage the pulleys. The head 41 also supports, for rotation about the vertical axis C, a shaft 10 carrying at its lower end a counter member 8 which, in the example illustrated, is cylindrical in shape. The lower end of the cylinder 8 is spaced slightly from the bottom of the bowl. The counter member 8 is rotated about the axis C by a belt 12, a toothed belt in the example illustrated, which takes the drive from a pulley 14 mounted on the shaft 13 and transmits it to a pulley 11 mounted on the shaft 10. This shaft is supported rotatably by a hub 9 anchored to the head 41. The transmission ratio between the pulleys 11 and 14 is selected so as to achieve a predetermined rate of rotation of the element 8.

With reference to Figures 8 and 9, the rate of rotation of the counter member 8 (which rotates in the same sense as the bowl and in the opposite sense to the kneading tool 3) is such that the peripheral velocity of the member 8 and the velocity of the bowl at the point indicated K are equal. This point corresponds to the intersection of the external surface of the counter member 8 (on the side facing towards the kneading tool 3) with the vertical plane containing the axes of rotation A, B and C. By virtue of this characteristic, the velocity of the dough in the region between the kneading tool 3 and the rotating counter member 8 is identical to the peripheral velocity of that member. The dough is thus not subjected to stretching, so that perfect homogeneity of the produce is ensured.

As already indicated in the introduction to the present description, in use, the presence of the counter member 9 causes the formation of an empty dough-free space X in the centre of the bowl, which ensures perfect aeration of the dough and keeps the dough at a low temperature.

Tests carried out by the Applicant have shown that the machine according to the invention causes an increase in the temperature of the dough of the order of 4-5°C. At the same time, the time necessary to produce the dough is relatively short (approximately 7 minutes).

Naturally, the principle of the invention remaining the same, the forms of embodiment and details of construction may be varied widely with respect to those described and illustrated purely by way of example.

For example, the shape of the rotating counter member 8 could be different from that illustrated.

## Claims

1. A kneading machine for food products, particularly flour mixtures, comprising:
a kneading bowl (2) which is rotatable about a vertical axis (B),
a kneading tool (3) which is rotatable within the kneading bowl (2) about a vertical axis (A) spaced from the axis of rotation of the bowl (B), and
a counter member (8) supported within the bowl (2) and separate therefrom, for creating a dough-free space in the centre of the bowl when the dough is rotated by the bowl (2), said counter member (8) being rotatable about a vertical axis (C) coplanar with, and in a position intermediate, the axes of rotation (A, B) of the kneading tool (3) and of the kneading bowl (2), and
means for rotating the counter member (8) in the opposite sense to the sense of rotation of the kneading tool (3) and in the same sense as the sense of rotation of the kneading bowl (2),
characterised in that the peripheral velocity of the counter member (8) is equal to the peripheral velocity of the bowl (2) in correspondence with the part of the counter member which is furthest from the axis of rotation of the bowl (B).

2. A kneading machine according to Claim 1, characterised in that means are provided for rotating the bowl (2) and the tool (3) independently, and in that means are provided for transmitting the drive between the tool (3) and the counter member (8).

## Patentansprüche

1. Knetmaschine für Nahrungsmittel, insbesondere Mehlgemische, umfassend:
- eine um eine vertikale Achse (B) drehbare Knetschüssel (2),
- ein innerhalb der Knetschüssel (2) um eine von der Drehachse (B) der Schüssel beabstandete vertikale Achse (A) drehbares Knetwerkzeug (3) und
- ein innerhalb der Schüssel (2) gehaltenes und von dieser getrenntes Gegenelement (8) zum Erzeugen eines teigfreien Raums in der Mitte der Schüssel, wenn der Teig mittels der Schüssel (2) gedreht wird, wobei das Gegenelement (8) um eine vertikale Achse (C) drehbar ist, welche Achse (C) zwischen den Drehachsen (A, B) des Knetwerkzeugs (3) und der Knetschüssel (2) liegt und mit diesen in einer gemeinsamen Ebene liegt, und
- Mittel zum Drehen des Gegenelements (8) in der zur Drehrichtung des Knetwerkzeugs (3) entgegengesetzten Drehrichtung und in der gleichen Richtung wie die Drehrichtung der Knetschüssel (2),
**dadurch gekennzeichnet,** daß die Umfangsgeschwindigkeit des Gegenelements (8) gleich ist der Umlaufgeschwindigkeit der Schüssel (2) an demjenigen Ort, der dem am weitesten von der Drehachse (B) der Schüssel entfernten Ort des Gegenelements entspricht.

2. Knetmaschine nach Anspruch 1, dadurch gekennzeichnet, daß Mittel zum voneinander unabhängigen Drehen der Schüssel (2) und des Werkzeugs (3) vorgesehen sind und daß Mittel zum Übertragen des Antriebs zwischen dem Werkzeug (3) und dem Gegenelement (8) vorgesehen sind.

## Revendications

1. Pétrin pour des denrées alimentaires, en particulier des mélanges de farine, comportant :
un bol de pétrissage (2) qui peut tourner autour d'un axe vertical (B),
un outil de pétrissage (3) qui peut tourner à l'intérieur du bol de pétrissage (2) autour d'un axe vertical (A) espacé de l'axe de rotation du bol (B), et
un élément opposé (8) supporté à l'intérieur du bol (2) et séparé de celui-ci, afin de créer un espace libre de pâte au centre du bol lorsque la pâte est entraînée en rotation par le bol (2), ledit élément opposé (8) pouvant tourner autour d'un axe vertical (C) coplanaire aux et dans une position entre les axes de rotation (A, B) de l'outil de pétrissage (3) et du bol de pétrissage (2), et
des moyens destinés à entraîner en rotation l'élément opposé (8) dans le sens opposé au sens de rotation de l'outil de pétrissage (3) et dans le même sens que le sens de rotation du bol de pétrissage (2),
caractérisé en ce que la vitesse périphérique de l'élément opposé (8) est égale à la vitesse périphérique du bol (2) en correspondance avec la partie de l'élément opposé qui est la plus éloignée de l'axe de rotation du bol (B).

2. Pétrin selon la revendication 1, caractérisé en ce que des moyens sont prévus pour entraîner en rotation le bol (2) et l'outil (3) de manière indépendante, et en ce que des moyens sont prévus pour transmettre l'entraînement entre l'outil (3) et l'élément opposé (8).
